(19) Europäisches Patentamt
European Patent Office
Office européen des brevets

(11) **EP 4 679 572 A1**

(12) **EUROPEAN PATENT APPLICATION**
published in accordance with Art. 153(4) EPC

(43) Date of publication:
**14.01.2026 Bulletin 2026/03**

(21) Application number: 24767149.8

(22) Date of filing: **05.03.2024**

(51) International Patent Classification (IPC):
**H01M 12/08** (2006.01)    **B09B 3/35** (2022.01)
**C22B 7/00** (2006.01)    **H01M 4/90** (2006.01)

(52) Cooperative Patent Classification (CPC):
**B09B 3/35; C22B 7/00; H01M 4/90; H01M 12/08;**
Y02E 60/50; Y02W 30/84

(86) International application number:
**PCT/JP2024/008335**

(87) International publication number:
**WO 2024/185782 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.03.2023 JP 2023036826**

(71) Applicants:
• **Sojitz Institute of Innovative Technologies, Ltd.
Tokyo 100-8691 (JP)**

• **Public University Corporation Suwa University of
Science Foundation
Chino-shi Nagano, 391-0292 (JP)**

(72) Inventors:
• **OGAWA, Satoshi
Chino-shi, Nagano 391-0292 (JP)**
• **AJIKI, Yoshiharu
Tokyo 100-8691 (JP)**

(74) Representative: **Regimbeau
20, rue de Chazelles
75847 Paris Cedex 17 (FR)**

(54) **REGENERATION DEVICE FOR REGENERATING USED FUEL OF FUEL CELL THAT USES METAL AS FUEL, REGENERATION METHOD, AND FUEL CELL COMPRISING REGENERATION DEVICE**

(57)    The present invention provides a fuel regeneration apparatus capable of preventing a short circuit due to an increase in the volume of metal. The present invention relates to a regeneration apparatus for regenerating fuel containing a metal oxide of a fuel cell using a metal as fuel, the apparatus comprising a container configured to be capable of accommodating the fuel containing the metal oxide, wherein the container comprises electrodes configured to be capable of applying a current to the fuel to reduce the metal oxide to a metal, and a crushing unit configured to be capable of mechanically crushing at least a part of the reduced metal generated on a surface of a negative electrode among the electrodes.

FIG.3

EP 4 679 572 A1

**Description**

FIELD

The present invention relates to a regeneration apparatus for regenerating spent fuel of a fuel cell using metal as fuel, a regeneration method, and a fuel cell comprising a regeneration apparatus.

BACKGROUND

With popularization and progress of mobile phones, electric vehicles, and the like in recent years, a high capacity of a battery as a power source thereof has been desired. In such a situation, a zinc-air battery is attracting attention as high energy density and a high-capacity battery superior to a currently widely used lithium ion battery because the zinc-air battery can be charged and discharged by using oxygen in the air as a positive electrode active material to cause an oxidation-reduction reaction of the oxygen in a positive electrode (air electrode) and by causing an oxidation-reduction reaction of zinc constituting a negative electrode at the negative electrode.

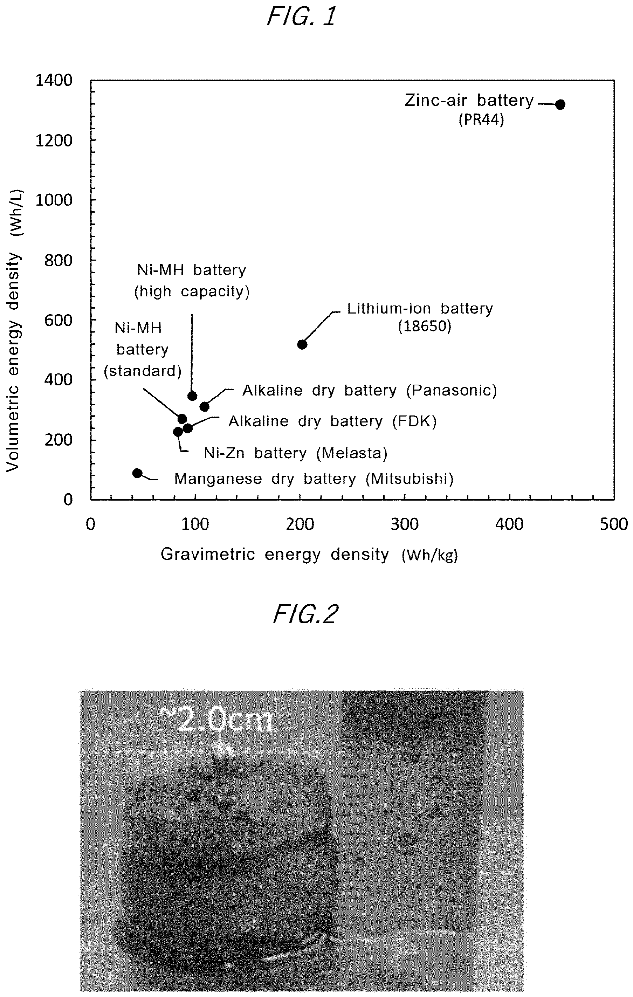

Zinc-air batteries as primary batteries have already been commercialized and distributed, and as shown in FIG. 1, they exhibit a very high energy density compared to other battery systems. Therefore, many studies have been conducted with the aim of converting zinc air batteries into secondary batteries, and in particular, large-scale studies have been conducted mainly at universities as a national project for over 10 years.

The charge-discharge mechanism of the zinc-air battery is represented by the following formulas (1) and (2). That is, the charge and discharge of the zinc-air battery is carried out by the discharge caused by the conversion of zinc into zinc oxide through zinc acid ($Zn(OH)_4{}^{2-}$) as a quasi-discharged state, and the charge caused by the reverse reaction.

Mathematical formula 1

$$Zn \text{ (charged state)} \leftrightarrow Zn(OH)_4{}^{2-} \text{ (quasi-discharged state)} + 2e^- \quad (1)$$

$$Zn(OH)_4{}^{2-} \text{ (quasi-discharged state)} \leftrightarrow ZnO \text{ (discharged state)} + H_2O + 2OH^- \quad (2)$$

For example, Patent Literature 1 discloses an example of a battery in which zinc is used as a negative electrode and nickel is used as a positive electrode. In Patent Literature 1, in order to prevent a short circuit caused by zinc dendrite, it is proposed to increase the distance between electrodes, and to stir electrolytic solution in the battery because a concentration gradient of zinc acid in the electrolytic solution is likely to be formed in an open space formed by increasing the distance between the electrodes.

Further, Patent Literature 2 proposes a secondary battery including a second electrode disposed opposite to a first electrode and having a surface area larger than that of a facing surface of the first electrode, and an electrode position changing means, wherein the secondary battery includes a removing means for scraping off dendrites formed on the second electrode.

[CITATION LIST]

[PATENT LITERATURE]

[PTL 1] Japanese Patent No. 6694955
[PTL 2] Japanese Unexamined Patent Publication No. 2013-225410

SUMMARY

[TECHNICAL PROBLEM]

However, the zinc-air secondary battery has not been well studied. The main reason for this is that when the discharged zinc oxide or zinc acid is charged, the volume of the generated zinc increases, causing the zinc to grow toward the counter electrode and resulting in a short circuit with the counter electrodes, and therefore, a large amount of zinc cannot be loaded in the battery. In the prior art disclosed in Patent literature 1 and the like, attempts have been made to increase the distance between electrodes to suppress a short circuit, but it is still insufficient. FIG. 2 shows an appearance photograph of zinc whose volume has increased from an initial thickness of 0.5 mm to a thickness of 2 mm as a result of charge and discharge cycles.

As described above, when a fuel cell including a metal-air battery such as a zinc-air battery is used as a secondary battery, in order to prevent a short circuit due to an increase in the volume of the metal, it is necessary to limit the amount of the metal, such as zinc, loaded into the battery, and it is difficult to draw out the potential of a metal such as zinc and achieve a high energy density.

Further, in the prior art such as Patent literature 2, since it is necessary to provide a structure in which the position-moving means is installed to move the second electrode having a large surface area while scraping off dendrites that have formed on the second electrode, it is difficult to reduce the size of the secondary battery.

Therefore, in order to make it possible to use a fuel cell using a metal such as zinc as a high-energy-density secondary battery, there is a demand for a small-sized fuel regeneration apparatus capable of preventing a short circuit caused by an increase in the volume of the metal.

[SOLUTION TO PROBLEM]

The gist of the present invention is as follows.

(1) A regeneration apparatus for regenerating spent fuel of a fuel cell using a metal as fuel, the apparatus comprising a container configured to be capable of accommodating the spent fuel, wherein

the spent fuel contains a metal compound of a metal oxide, a metal hydroxide, or a combination thereof, and the container comprises:

a pair of electrodes configured to be capable of performing a reduction treatment to reduce the metal compound to a metal by applying a current to the spent fuel, and
a crushing unit configured to be capable of performing a crushing treatment to mechanically crush at least a part of the reduced metal formed on a surface of a negative electrode of the pair of electrodes.

(2) The regeneration apparatus according to (1) above, wherein the container comprises a first container and a second container connected to the first container, and the second container comprises the electrode and the crushing unit.
(3) The regeneration apparatus according to (2) above, wherein the second container is located below the first container.
(4) The regeneration apparatus according to any one of (1) - (3) above, further comprising a third container configured to be capable of accommodating fuel regenerated by the reduction treatment and the crushing treatment.
(5) The regeneration apparatus according to (4) above, wherein the third container is located below the container.
(6) A fuel cell comprising the regeneration apparatus according to any one of (1) - (5) above and a discharge section.
(7) The fuel cell according to (6) above, further comprising a positive electrode for charging, a negative electrode for both charging and discharging, and a positive electrode for discharging, wherein the positive electrode for charging and the negative electrode for both charging and discharging constitute the electrode, and the positive electrode for discharging and the negative electrode for both charging and discharging constitute the discharge section.
(8) The fuel cell according to (6) above, further comprising a positive electrode for charging, a negative electrode for charging, a positive electrode for discharging, and a negative electrode for discharging, wherein the positive electrode for charging and the negative electrode for charging constitute the electrode, and the positive electrode for discharging and the negative electrode for discharging constitute the discharge section.
(9) The regeneration apparatus according to any one of (1) to (5) above, wherein the fuel cell is a metal-air battery, a metal flow battery, or a metal slurry fuel cell.
(10) The fuel cell according to any one of (6) to (8) above, wherein the fuel cell is a metal-air battery, a metal flow battery, or a metal slurry fuel cell.
(11) A regeneration method for regenerating spent fuel of a fuel cell using a metal as fuel, wherein the spent fuel contains a metal compound of a metal oxide, a metal hydroxide, or a combination thereof,
the regeneration method comprising:

accommodating the spent fuel in a container;
applying a current to the spent fuel using electrodes to perform a reduction treatment to reduce the metal compound into a metal; and
performing a mechanical crushing treatment on at least a part of the reduced metal formed on a surface of a negative electrode of the electrodes to regenerate the spent fuel.

(12) The regeneration method according to (11) above, wherein the fuel cell using a metal as fuel comprises a cartridge-type anode unit, and wherein the accommodating the spent fuel in the container comprises retrieving the spent fuel from the cartridge-type anode unit and placing the spent fuel into the container.

(13) The regeneration method according to (11) or (12) above, comprising retrieving the regenerated fuel from the container and using the retrieved regenerated fuel as fuel for a fuel cell.

[ADVANTAGEOUS EFFECTS OF INVENTION]

According to the present invention, it is possible to provide a small-sized fuel regeneration apparatus capable of preventing a short circuit caused by an increase in the volume of metal.

BRIEF DESCRIPTION OF DRAWINGS

FIG. 1 is a graph showing the relationship between the weight energy density and the volume energy density of various batteries.

FIG. 2 is a photograph of the appearance of zinc having increased bulk from an initial thickness of 0.5 mm to a thickness of 2 mm by repeating charging and discharging.

FIG. 3 is a schematic cross-sectional diagram of an example of the regeneration apparatus.

FIG. 4 is a schematic cross-sectional diagram of another example of the regeneration apparatus.

FIG. 5 is a schematic cross-sectional diagram of another example of the regeneration apparatus.

FIG. 6 is a schematic diagram of the apparatus comprising a first container and a second container.

FIG. 7 is a schematic diagram of a three-electrode metal-air battery comprising the regeneration apparatus.

FIG. 8 is a graph showing charge-discharge characteristics with respect to the amount of zinc oxide to be loaded into the metal-air battery of FIG. 7.

FIG. 9 is a schematic diagram of a four-electrode metal-air battery comprising the regeneration apparatus.

FIG. 10 is a schematic diagram of a metal-air battery of a comparative example.

FIG. 11 is a graph of a discharge voltage obtained by a metal-air battery comprising the regeneration apparatus.

FIG. 12 is a schematic diagram of a four-electrode metal-air battery comprising the regeneration apparatus.

FIG. 13 is a schematic diagram of the regeneration apparatus and a fuel cell (discharge cell) prepared separately.

FIG. 14 is a schematic diagram of the regeneration apparatus and a fuel cell (discharge cell) prepared separately.

FIG. 15 is a schematic cross-sectional view of a rotating barrel having a negative electrode for charging.

DESCRIPTION OF EMBODIMENTS

The present disclosure is directed to a regeneration apparatus (hereinafter also referred to as the apparatus) for regenerating spent fuel of a fuel cell using a metal as fuel, the apparatus comprising a container configured to be capable of accommodating the spent fuel, wherein the spent fuel contains a metal compound of a metal oxide, a metal hydroxide, or a combination thereof, and the container comprises a pair of electrodes configured to be capable of performing a reduction treatment to reduce the metal compound to a metal by applying a current to the spent fuel, and a crushing unit configured to be capable of performing a crushing treatment to mechanically crush at least a part of the reduced metal formed on a surface of a negative electrode of the pair of electrodes.

The present inventors, as a result of intensive studies, found that a metal (hereinafter also referred to as metal dendrites or precipitated metal, such as zinc) generated during the reduction treatment (charging) of a metal compound (for example, zinc oxide or zinc acid) in spent fuel is low in density and bulky, but by subjecting the metal produced in the reduction treatment to a crushing treatment, its density can be increased and its bulkiness reduced, thereby completing the present apparatus. According to the present invention, since the volume of the metal generated (deposited) in the reduction treatment can be reduced, it is possible to prevent a short circuit due to an increase in the volume of the metal, and thus it is possible to load a larger amount of metal fuel in a small fuel cell.

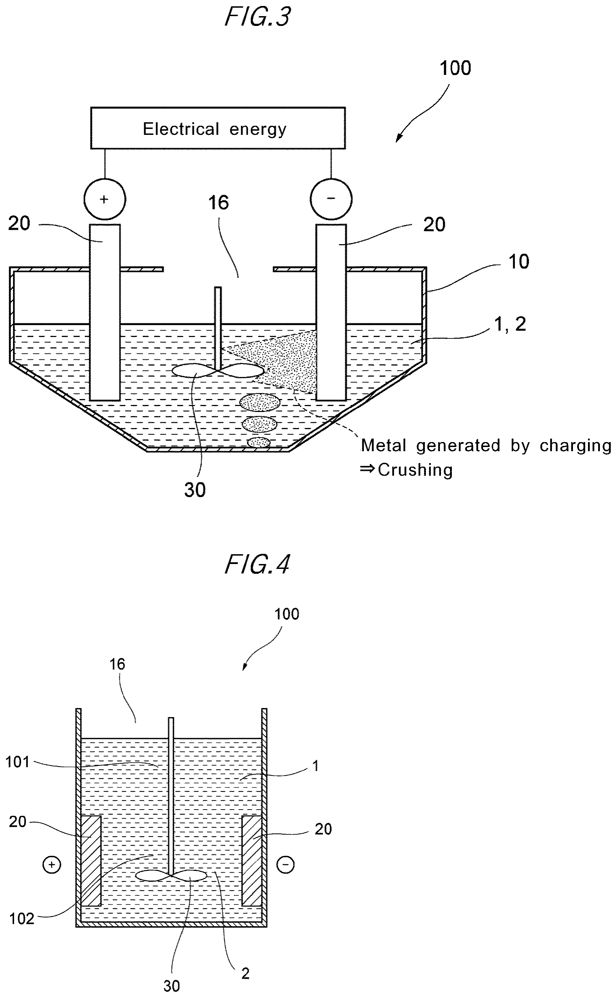

FIG. 3 is a schematic cross-sectional diagram illustrating an example of the apparatus 100. The apparatus 100 comprises a container 10. The container 10 is configured to be able to accommodate spent fuel 1. The container 10 comprises a pair of electrodes 20 and a crushing unit 30. The container 10 may have an introduction section for accommodating the spent fuel 1. The container 10 may also have an outlet section for discharging regenerated fuel 2 after the reduction and crushing treatments.

The introduction of the spent fuel 1 and the discharge of the regenerated fuel 2 may be performed by using a pump, but is preferably performed by using gravity. The introduction section is provided on the upper surface or the side surface of the container 10, and the outlet section is provided on the side surface or the bottom surface of the container 10, whereby the introduction of the spent fuel 1 and the discharge of the regenerated fuel 2 can be performed using gravity. When the introduction of the spent fuel 1 and the discharge of the regenerated fuel 2 are performed by using gravity, the introduction section may be an opening, an openable/closable lid, a valve, or the like, and the outlet section may be an openable/closable lid, a valve, or the like. The valve can be a gate valve, a globe valve, a ball valve, a butterfly valve, a diaphragm valve, a solenoid valve, or the like.

The material of the container 10 is not particularly limited as long as it is chemically stable when in contact with fuel, and can be alkali-resistant, and can be, for example, acrylic, polyvinyl chloride, polypropylene, polystyrene, polyethylene, or the like. In addition, the container 10 may also be a composite, such as a metal container whose inner wall is coated with an alkali-resistant paint.

In the present specification, a fuel cell using a metal as fuel (hereinafter also simply referred to as a fuel cell) refers to a metal-air battery, a metal flow battery, or a metal slurry fuel cell. The metal-air battery is a battery in which oxygen in air is used as a positive electrode active material and metal is used as a negative electrode active material. The metal flow battery, also called a flow-type metal-air battery, has a configuration in which metal is used as fuel (active material), and the cell for charging and discharging the storage battery and the storage unit for the energy-storing material including an electrolytic solution are independently connected to each other by pipes. The metal slurry fuel cell is a battery in which metal fuel is integrated with an electrolytic solution to form a slurry as an energy source.

In the present specification, the fuel may include an electrolyte solution containing a metal active material, a fuel containing a metal slurry, and the like, depending on the type of the fuel cell. When using (discharging) the fuel cell, the metal may be oxidized to generate a metal compound of a metal oxide, a metal hydroxide, or a combination thereof (hereinafter also collectively referred to as a metal compound). The metal compound can be an ion. In the present specification, the term "regeneration" refers to a concept including charging, for example, regeneration of metal fuel, charging of an electrolytic solution containing metal as an active material, and the like. The metal can be a metal that can be deposited by aqueous plating, such as zinc, copper, tin, bismuth, phosphorus, nickel, lead, and the like, preferably zinc.

The electrodes 20 is configured to be capable of reducing oxidized metal in the spent fuel 1. The electrodes 20 includes a pair of electrodes configured to be partially immersed in the spent fuel 1. By applying electrical energy to the electrodes 20, electrons can be supplied to the metal compound in the spent fuel 1 to perform a reduction treatment, i.e., charging. The electrodes 20 are cathode electrodes, and are not particularly limited as long as they are conductors stable in an alkaline electrolyte, and may be made of, for example, a metal such as nickel, iron, titanium, platinum, or gold, or carbon. The electrical energy applied to the electrodes 20 is preferably renewable energy.

The apparatus can be used, for example, as an apparatus in combination with a stationary battery and can convert surplus electric power into a metal such as zinc. Conventionally, surplus electric power is converted into a gas such as hydrogen, but according to the present apparatus, surplus electric power can be converted into a metal such as zinc that is easier to handle than gas. The surplus electric power is surplus power corresponding to a difference when the amount of power generated from renewable energy, which varies depending on weather or the like, exceeds the amount of power consumed by the load. In the case where the load is connected to both the system power and the power generation apparatus using renewable energy, when the surplus electric power is generated, the surplus electric power is sold to the system side, and a burden is imposed on the system power side as a reverse power flow. Therefore, it is desirable that the reverse power flow is not generated as much as possible. According to the apparatus, it is possible to efficiently convert the surplus electric power to a metal such as zinc.

The crushing unit 30 is configured to be capable of mechanically crushing at least a portion of the reduced metal generated on the surface of the electrode 20. In the present application, the mechanically crushing means crushing the metal dendrite generated on the surface of the electrode 20 into reusable metal fuel for a fuel cell. The form of the reusable metal fuel is not particularly limited, and the metal may be in a powder form, a granular form, a lump form, a plate form, a film form, a block form, or the like. In the present application, the crushing preferably means pulverization, disintegration, or a combination thereof.

In the present application, the mechanical means that the crushing unit 30 directly or indirectly applies a force to the metal dendrite. That is, in the present application, the crushing includes that the crushing unit 30 mechanically crushes the metal dendrite in contact with or in non-contact with the metal dendrite. The mechanical crushing in contact means that the crushing unit 30 is in contact with the metal dendrite and directly applies a mechanical action to crush it. The mechanical crushing in non-contact means that the crushing unit 30 crushes the metal dendrite by applying a mechanical action indirectly, without contacting the metal dendrite, through a medium such as a liquid, using, for example, ultrasonic waves described below. The crushing unit 30 may be composed of one or more crushers or the like. During fuel regeneration (charging), a metal such as zinc having a low density is deposited on the negative electrode of the electrodes 20, but it can be mechanically crushed by the crushing unit 30. The crushing unit 30 is configured to be capable of crushing a metal with low density generated by regeneration (charging), and may be configured of a metal, a ceramic, a plastic, or the like.

The crushing unit 30 may be configured to crush the metal deposited on the electrode surface by sliding on the surface of the negative electrode of the electrodes 20, and may be configured to crush the metal grown to a predetermined thickness from the electrode surface with a predetermined distance from the surface of the electrodes 20.

The configuration of the crushing unit 30 is not particularly limited as long as it is capable of crushing a metal such as zinc, which is deposited with low density on the electrode 20 during regeneration (charging), and may be, for example, a scraper, a stir bar, an agitator such as a stirring blade, a mechanism for shaking the entire apparatus, a mechanism for shaking the electrode, a mechanism for applying ultrasonic waves, a mechanism for compression, or the like. Among the examples of the crushing unit 30 described above, examples of mechanically crushing the deposited metal in contact include a scraper, a stir bar, an agitator such as a stirring blade, a rotating barrel, and a mechanism for compression, and examples of mechanically crushing the deposited metal in non-contact include a mechanism for shaking the entire apparatus, a mechanism for shaking the electrode, and a mechanism for applying ultrasonic waves. The above examples do not limit the contact or non-contact, and for example, in the case of the stirring blade, not only the stirring blade is brought into contact with the metal dendrite to crush the metal dendrite, but also the metal dendrite can be crushed by a water flow generated by the stirring blade in a state where the stirring blade is not in contact with the metal dendrite.

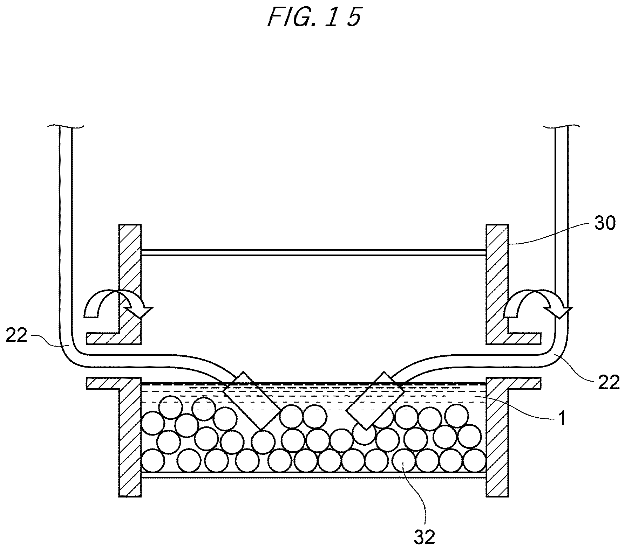

The rotating barrel may comprise a mesh, holes, or a combination thereof, having a size that allows the electrolyte to pass between the inside and the outside of the rotating barrel, but prevents the media placed inside the rotating barrel from passing through. The crushed metal may pass through the mesh, holes, or combination thereof, but the rotating barrel may comprise a mesh, holes, or a combination thereof, having a size that prevents the crushed metal from passing through. The rotating barrel may also have a negative electrode for charging, which is provided inside the rotating barrel and passes through the rotation axis or in the vicinity thereof. As illustrated in FIG. 15, the negative electrode for charging 22 may be disposed inside the rotating barrel serving as the crushing unit 30, extending through the rotation axis or in the vicinity thereof, so as not to rotate together with the rotating barrel, and may preferably be suspended downward so as to come into contact with the media 32. The negative electrode for charging 22, which is disposed inside the rotating barrel from the rotation axis of the rotating barrel or from the vicinity thereof, may be a metal wire, a metal foil, a metal mesh, or the like.

The material of the rotating barrel is not particularly limited as long as it is non-conductive and has a rotatable strength by inserting a medium therein, and can be made of resin, ceramic, or a composite thereof. The rotating barrel is preferably made of an alkali-resistant resin, such as polypropylene, polyvinyl chloride, polyvinylidene chloride, polyethylene, polystyrene, or phenol. The shape of the rotating barrel is not particularly limited, but may be a cylindrical shape, a polygonal shape, or a combination thereof when viewed in a direction parallel to the rotation axis.

The rotating barrel has a media therein for crushing the deposited metal. The material of the medium may be made of a material having a strength capable of crushing the deposited metal and having at least an alkali-resistant and electrically conductive surface. The medium may be, for example, a metal medium, a medium having a metal film such as copper formed by electroless plating on the surface of a resin such as nylon, or the like. The conductive material constituting at least the surface of the medium may be the same metal as the current collector usable for the negative electrode for charging, and is preferably a metal which does not generate hydrogen even when it comes into contact with the metal fuel. If the metal fuel is zinc, the electrically conductive material that constitutes at least the face of the medium can be, for example, Cu, In, Sn, Bi, or Pb. The media can have any three-dimensional shape, such as a sphere, cylinder, cone, polyhedron, etc., and is preferably a sphere. The size of the medium is not particularly limited, but may have a diameter of, for example, 0.1 to 10 mm, 0.5 to 5 mm, or 1 to 3 mm.

When the metal compound is regenerated (charged) while the rotating barrel is rotated, metal dendrites are deposited on the surface of the negative electrode for charging of the rotating barrel, and metal dendrites are also deposited on the surface of the medium. Since the medium moves due to the rotation of the rotating barrel, collisions occur between the negative electrode for charging and the medium, as well as between media, and the metal dendrites deposited on the surface of the negative electrode for charging are crushed, and the metal dendrites deposited on the surface of the medium can also be crushed. The crushed metal dendrites may be deposited at the lower part of the rotating barrel. The crushed metal dendrites may also be deposited at the lower part of the container, provided that they have a size allowing them to pass through a mesh or holes in the rotating barrel. The crushed metal retained within the rotating barrel, the crushed metal deposited at the lower part of the container, or both, may be used as regenerated fuel.

At least a portion of the metal dendrites deposited on the surface of the medium may be crushed and compressed by collision with the negative electrode for charging or collision between the media to form a film on the surface of the media. That is, the metal dendrites deposited on the surface of the medium may fall off from the medium by crushing as described above, or may be crushed and compressed by collision between the media and remain on the surface of the medium. Media having crushed and compressed metal on the surface can be used as regenerated fuel with or without crushed metal deposited at the lower part of the rotating barrel, the lower part of the container, or a combination thereof.

As described above, the medium functions as the crushing unit 30 together with the rotating barrel, and not only the metal deposited on the surface of the negative electrode for charging but also the metal deposited on the surface of the medium can be crushed and used as regenerated fuel, and furthermore, the medium having the film of the deposited metal on the surface can be used as regenerated fuel.

When using the crushed metal deposited at the lower portion of the rotating barrel and the media having a film of deposited metal on the surface thereof is used as regenerated fuel, it is preferable to deposit the crushed metal inside the rotating barrel. In this case, the crushed metal and the media after the reduction treatment can be collectively recovered as regenerated fuel, which is convenient.

When only the crushed metal is used as regenerated fuel, or only the media having a film of deposited metal on the surface thereof is used as regenerated fuel, it is preferred to deposit the crushed metal at the lower portion of the container outside the rotating barrel. In this case, the crushed metal and the media after the reduction treatment can be recovered separately as regenerative fuel, which is convenient.

When the reduced metal is used as regenerative fuel, a solution of the spent fuel recovered together with the reduced metal may be used as regenerative fuel, or only the reduced metal may be recovered and mixed with a newly prepared solution, and the mixture may be used as regenerative fuel. For example, when the crushed metal is used as regenerated fuel, a solution of the spent fuel recovered together with the crushed metal may be used as regenerated fuel, or only the crushed metal may be recovered and mixed with a newly prepared solution, and the mixture may be used as regenerated fuel. For example, when the media having a deposited metal film on the surface thereof is used as regenerated fuel, a solution of the spent fuel recovered together with the media may be used as regenerated fuel, or only the media may be recovered and mixed with a newly prepared solution, and the mixture may be used as regenerated fuel.

The mechanism for compression is, for example, a press mechanism having a press portion. The material of the press mechanism is not particularly limited as long as it is non-conductive, has a strength capable of crushing the metal dendrites by pressing, and is alkali-resistant, and for example, it can be made of a resin such as polytetrafluoroethylene (PTFE), a ceramic, or a composite thereof, or a material obtained by coating the surface of a metal with a resin or a ceramic. The shape of the press portion is not particularly limited, and may be a plate shape. By crushing the metal dendrites by pressing, the metal dendrites can be compressed simultaneously with the crushing and densified into a plate shape, which is preferable from the viewpoint of ease of handling the regenerative fuel and energy density. In the case where the plate-shaped metal is used as regenerated fuel, a solution of the spent fuel recovered together with the plate-shaped metal may be used as regenerated fuel, or only the plate-shaped metal may be recovered and mixed with a newly prepared solution, and the mixture may be used as regenerated fuel.

The mechanism for applying ultrasonic waves is, for example, an ultrasonic homogenizer. The ultrasonic homogenizer is composed of an oscillator and a vibrator, converts the output sent from the oscillator into vibration by a vibrating element inside the vibrator, and causes a tip at the tip of the vibrator to generate, for example, about 20,000 longitudinal vibrations per second. This vibration generates bubbles called cavitation in the liquid, and when the bubbles collapse, the metal dendrites can be crushed by impacting the surrounding particles.

The crushing unit 30 may constantly perform a crushing operation, or may perform a crushing operation at a predetermined timing. The predetermined timing may be a fixed time interval or an arbitrary timing. Preferably, the crushing unit 30 includes a sensor for detecting the amount of metal deposition (growth amount) from the negative electrode surface of the electrodes 20 toward the counter electrode, and the crushing unit 30 may be controlled such that the crushing operation is started when the sensor detects deposition of a predetermined thickness, and the crushing operation is stopped when the sensor no longer detects deposition of the predetermined thickness.

The sensor may be, for example, an optical sensor. The apparatus 100 may include a control unit to perform the above-described control. The control unit may include a communication unit for communicating with the sensor and the crushing unit 30, a storage unit that stores data received by the communication unit, a processing unit that determines whether or not the deposition amount is equal to or greater than a predetermined thickness based on the data stored in the storage unit, and the like.

As illustrated in FIG. 3, the container 10 may have, without a partition, a portion for accommodating the spent fuel 1 introduced from the introduction section 16, and a portion for accommodating the spent fuel 1 and provided with the electrodes 20 and the crushing unit 30. With the configuration as shown in FIG. 3, it is possible to reduce the size of the regeneration apparatus.

Alternatively, as illustrated in FIG. 4, the container 10 may have a first accommodation section 101 for accommodating the spent fuel 1 introduced from the introduction section 16 at the upper part, and a second accommodation section 102 for regenerating the spent fuel 1 to regenerated fuel 2 and accommodating the regenerated fuel 2, the second accommodation section 102 being provided with the electrodes 20 and the crushing unit 30, at the lower part. With the configuration shown in FIG. 4, it is possible to reduce the size of the regeneration apparatus.

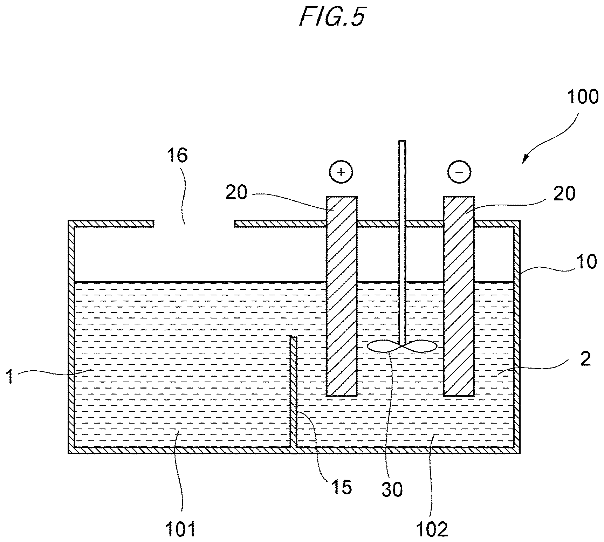

Alternatively, as illustrated in FIG. 5, the container 10 may include a partition plate 15, a first accommodation section 101 that accommodates the spent fuel 1 introduced from the introduction section 16, and a second accommodation section 102 that includes the electrodes 20 and the crushing unit 30, which regenerates the spent fuel 1 into regenerated fuel 2 and accommodates the regenerated fuel 2, the first accommodation section 101 and the second accommodation section 102 being separated by the partition plate 15. Also in the configuration as shown in FIG. 5, a regeneration apparatus with a relatively small size and a simple structure can be obtained.

The partition plate 15 may be a plate having a hole or a net through which the spent fuel 1 can pass, or a plate through which the spent fuel 1 cannot pass. In the case where the partition plate 15 is a plate that does not allow the spent fuel 1 to pass therethrough, as illustrated in FIG. 5, the length of the partition plate 15 in the vertical direction is configured to be shorter than the depth of the spent fuel 1 such that the spent fuel 1 is separated into the first accommodation section 101 and the second accommodation section 102 at a deep portion, while allowing the spent fuel 1 to diffuse between the first accommodation section 101 and the second accommodation section 102 at a shallow portion.

Preferably, the container 10 comprises a first container 11 and a second container 12 connected to the first container 11, the second container 12 comprising electrodes 20 and a crushing unit 30.

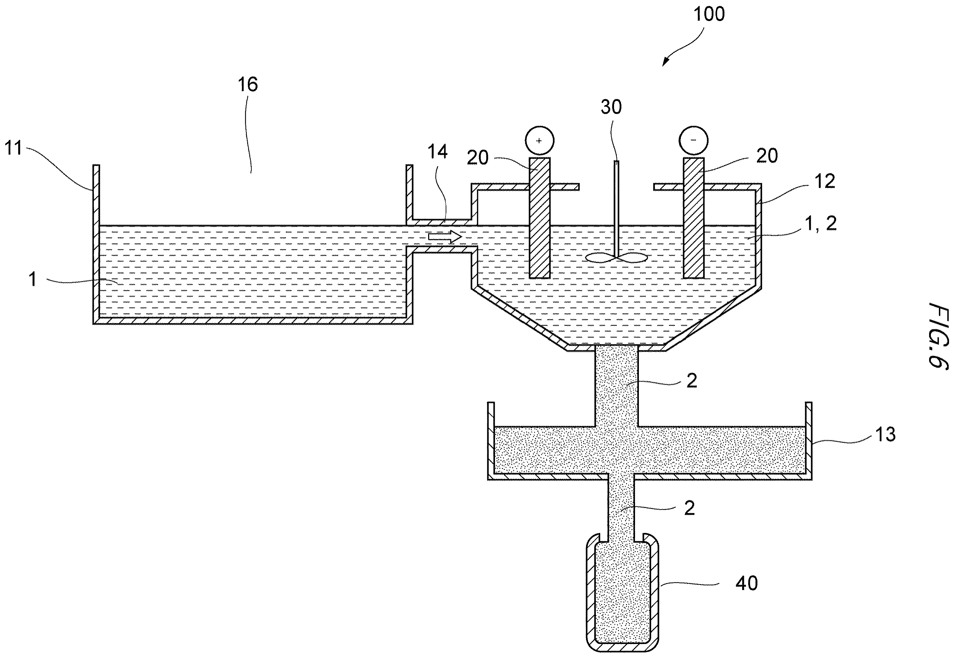

FIG. 6 shows a schematic diagram of the apparatus 100 comprising the first container 11 and the second container 12. The first container 11 is configured to be able to accommodate the spent fuel 1. The first container 11 may have an introduction section 16 for introducing the spent fuel 1. The configuration of the introduction section 16 may be the same as the configuration described above. The first container 11 comprises a connection section 14 with the second container 12. Even in the configuration as shown in FIG. 6, a regeneration apparatus with a relatively small size and a simple structure can be obtained.

The second container 12 is connected to the first container 11 via the connection section 14, and is configured to be able to accommodate the spent fuel 1. The second container 12 includes electrodes 20 and a crushing unit 30. The configurations of the electrodes 20 and the crushing unit 30 may be the same as the configuration described above. The connecting section 14 is configured to be able to move at least a portion of the spent fuel 1 introduced into the first container 11 toward the second container 12 in a direction indicated by an arrow. The second container 12 may be provided with a replenishment port for replenishing moisture, electrolyte, or the like, such as an alkaline solution.

The method of moving the spent fuel 1 through the connection section 14 from the first container 11 to the second container 12 is not particularly limited, and the spent fuel 1 may be moved using a pump, or the second container 12 may be positioned below the first container 11 to move the spent fuel 1 from the first container 11 to the second container 12 using the weight.

Alternatively, as illustrated in FIG. 6, the first container 11 and the second container 12 are arranged at substantially horizontal positions, and the spent fuel 1 may be transferred to the second container 12 through the connection section 14 disposed at a predetermined position above the bottom of the first container 11. When the first container 11 and the second container 12 are connected through the connection section 14 at a predetermined position above the bottom part of the first container 11, the spent fuel 1 at a shallow portion can be transferred to the second container 12 while preventing sediments, which are foreign substances contained in the spent fuel 1, from being transferred to the second container 12 by retaining the sediments in the first container. Therefore, only the fuel containing the metal compound and/or the metal compound ions necessary for charging can be transferred to the second container 12.

Since the fuel accommodated in the first container contains a large amount of oxidized metal and the oxidized metal is reduced in the fuel accommodated in the second container, a concentration gradient of the oxidized metal may be formed between the first container and the second container. This concentration gradient causes concentration diffusion and the oxidized metal in the fuel can move from the first container to the second container.

Preferably, the apparatus 100 further comprises a third container 13 configured to be able to accommodate the regenerated fuel 2 containing the metal subjected to the reduction treatment and the crushing treatment. The regenerated fuel 2 containing the reduced and crushed metal may be recovered from the container 10 or the second container 12 to the third container 13. The third container 13 may be provided with a replenishment port for replenishing moisture, electrolyte, or the like, such as an alkaline solution. The transfer of the regenerated fuel 2 from the container 10 or the second container 12 to the third container 13 can be carried out in any manner, for example by using a pump, but preferably the regenerated fuel 2 is transferred by utilizing gravity to the third container 13 arranged below the container 10 or the second container 12. FIG. 6 shows an example in which the regenerated fuel 2 is moved from the second container 12 to the third container 13 disposed below by utilizing gravity.

Preferably, the third container 13 is positioned below the container 10 or the container 12. By positioning the third container 13 below the container 10 or the container 12, the regenerated fuel 2 subjected to the reduction treatment and the crushing treatment can be accommodated in the third container 13 from the container 10 or the container 12 by utilizing gravity.

The materials of the first container 11, the second container 12, and the third container 13 are not particularly limited as long as they are chemically stable when in contact with fuel, and can be the same materials as those of the container 10.

The regenerated fuel 2 subjected to the reduction treatment and the crushing treatment may preferably be recovered from the container 10, the second container 12, or the third container 13 into the transportable recovery container 40. FIG. 6 shows an example in which the regenerated fuel 2 is recovered from the third container 13 into the recovery container 40. The recovery container 40 may preferably be positioned below the container 10, the second container 12, or the third container 13, and the regenerated fuel 2 is recovered by utilizing gravity. The material of the recovery container 40 is not particularly limited as long as it can hold the regenerated fuel 2, and may be made of the same material as the container 10.

The fuel contained in the metal-air battery, the metal flow battery, or the metal slurry fuel cell can be an aqueous solution containing metal, can be an electrolytic solution, and can be, for example, an aqueous alkaline solution.

The powder of the deposited metal subjected to the crushing treatment is not substantially in a dispersed state, and particles of the deposited metal can be in contact with each other to be electrically conductive. In the container, the powder of the deposited metal subjected to the crushing treatment precipitates toward the bottom, and the electrode is immersed in the aqueous solution, and the reduction treatment (electrodeposition) of the oxidized metal is carried out.

The present disclosure also relates to a fuel cell (hereinafter also referred to as the fuel cell) using a metal as fuel, which comprises the above-described regeneration apparatus and a discharge section. The fuel cell can be discharged in the discharge section using the regenerated fuel produced by the regeneration apparatus. The discharge section is preferably positioned below the regeneration apparatus. When the discharge section is positioned below the regeneration apparatus, the fuel regenerated by the regeneration apparatus can be moved to the discharge section by utilizing gravity, due to its own weight.

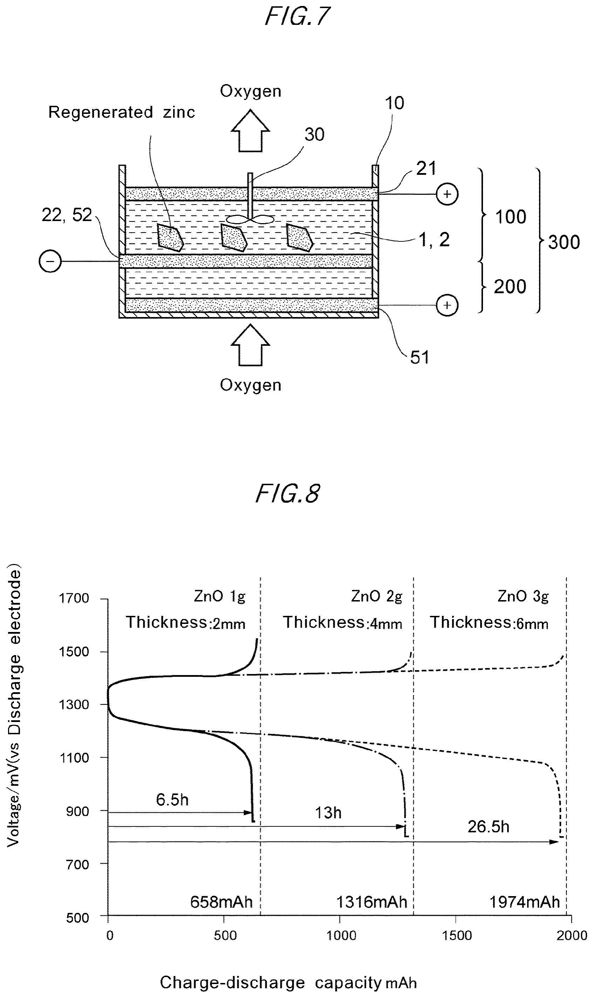

As illustrated in FIG. 7, the fuel cell 300 is preferably a three-electrode battery including a positive electrode for charging 21, a negative electrode for both charging and discharging 22, 52, and a positive electrode for discharging 51, wherein the positive electrode for charging 21 and the negative electrode for both charging and discharging 22 constitute the above-described electrodes 20, and the positive electrode for discharging 51 and the negative electrode for both charging and discharging 52 constitute the discharge section 200.

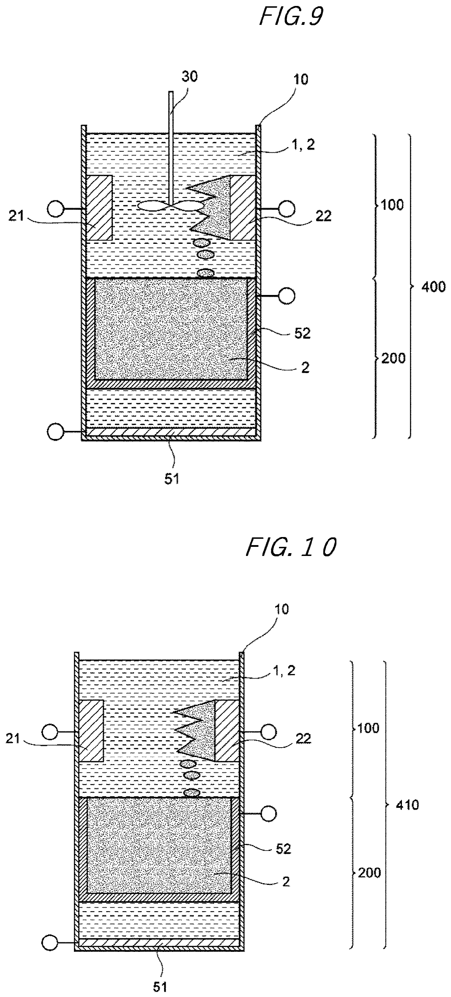

As illustrated in FIG. 9, the fuel cell 400 is a four-electrode battery including a positive electrode for charging 21, a negative electrode for charging 22, a positive electrode for discharging 51, and a negative electrode for discharging 52, wherein the positive electrode for charging 21 and the negative electrode for charging 22 constitute the above-described electrodes 20, and the positive electrode for discharging 51 and the negative electrode for discharging 52 constitute the discharge section 200. With the configuration illustrated in FIGS. 7 and 9, a fuel cell with a small size, a simple structure, and a high energy density can be obtained.

The fuel cell can be a metal-air battery, a metal-flow battery, or a metal-slurry fuel cell.

The present disclosure also relates to a regeneration method for regenerating spent fuel of a fuel cell using a metal as fuel, wherein the spent fuel contains a metal compound of a metal oxide, a metal hydroxide, or a combination thereof, the regeneration method comprising: accommodating the spent fuel in a container; applying a current to the spent fuel using electrodes to perform a reduction treatment to reduce the metal compound into a metal; and performing a mechanical crushing treatment on at least a part of the reduced metal generated on a surface of a negative electrode of the electrodes to regenerate the spent fuel (hereinafter also referred to as the regeneration method).

Oxygen generated during regeneration (charging) may be utilized by being introduced into the discharge section (discharge cell) 200.

In the regeneration method, preferably, the fuel cell using a metal as fuel has a cartridge-type anode unit, and the accommodating the spent fuel in the container comprises retrieving the spent fuel from the cartridge-type anode unit and placing the spent fuel into the container.

The regeneration method preferably comprises retrieving the regenerated fuel from the container 10 and using the retrieved regenerated fuel as fuel for a fuel cell.

EXAMPLES

(Reference Example 1) Evaluation of Metal-Air Battery Using Fuel Subjected to Reduction Treatment

A fuel cell 300, which is a three-electrode metal-air battery schematically shown in FIG. 7, was fabricated. The fabricated fuel cell 300 had a cylindrical container 10 made of acrylic, with an inner diameter of 25 mm and a height of 25 mm. Inside the container 10, a positive electrode for charging 21 was provided in the upper part, a negative electrode for both charging and discharging 22, 52 were provided in the middle part, and a positive electrode for discharging 51 was provided in the lower part. The fuel cell 300 was configured such that oxygen could be taken in from the side of the positive electrode for discharging 51. As the crushing unit 30, a stirring blade (1-7124-02 Three-One Motor BL600 (AXEL) AS ONE) was arranged between the upper positive electrode for charging 21 and the middle negative electrodes for both charging and discharging 22 and 52. The fuel cell 300 was composed of the container 10, the regeneration apparatus 100 including the positive electrode for charging 21, the negative electrode for both charging and discharging 22, and the crushing unit 30, and the discharge section 200 including the positive electrode for discharging 51 and the negative electrode for both charging/discharging 52.

As the positive electrode for charging 21 in the upper part, a metal mesh made of nickel having an opening for passing the agitator of the crushing unit 30 in the central portion was used. A metal mesh made of copper was used as the negative electrode 22 and 52 for both charging and discharging. A Ni-plated SUS mesh was used as the positive electrode for discharging 51 in the lower part.

Ketjen Black, a polytetrafluoroethylene (PTFE) aqueous dispersion (solid concentration Nv60%), and water were mixed at a mass ratio of 10:1:2, and the mixture was placed in a polyethylene bag and rolled using a roll press apparatus adjusted to a gap of 0.5 mm between the rolls, thereby obtaining a flat plate-shaped paste. The obtained flat plate-shaped paste was rolled onto the Ni-plated SUS mesh used as the positive electrode for discharging 51 of the lower part to integrate them, and further, a gas-permeable PTFE water-repellent film (thickness: 100 $\mu$m, Gurley value: 18 sec/100 mL) was laminated onto the other surface (the lowermost surface) thereof by rolling, thereby preparing an air electrode layer (oxygen reduction electrode) of the positive electrode for discharging 51 (positive electrode current collector)/catalyst layer/PTFE water-repellent film.

Into the fabricated fuel cell 300, 25 g of a 3M aqueous potassium hydroxide solution containing 1 g of zinc oxide after discharge (particle diameter: 0.3 $\mu$m) was introduced as the electrolytic solution from the positive electrode for charging 21 made of the metal mesh, and passed through the negative electrode for both charging and discharging 22, 52, filling the space from the upper positive electrode for charging 21 to the lower positive electrode for discharging 51.

In the upper two electrodes of FIG. 7, zinc oxide in the electrolytic solution was reduced (charged) to zinc, and discharging was performed in the lower two electrodes using the reduced zinc as fuel. During charging, a current was applied from the middle negative electrode 22 toward the upper positive electrode for charging 21, and during discharging, a current was applied from the middle negative electrode 52 toward the lower positive electrode for discharging 51.

Instead of the 3M aqueous potassium hydroxide solution containing 1 g of zinc oxide, 6M and 9M aqueous potassium hydroxide solutions containing 2 g and 3 g of zinc oxide were introduced, respectively, and the reduction treatment (charging) and discharging were performed in the same manner. In the charge-discharge test, a charge-discharge test device (HJ-1001SD8) manufactured by Hokuto Denko Corporation was used as a measuring instrument to measure the charge capacity and discharge capacity depending on the amount of zinc oxide from the behavior of the charging voltage and the discharging voltage under the condition of a charge-discharge current of 100 mA. FIG. 8 shows a graph of charge-discharge characteristics when charging and discharging were performed using the three-electrode metal-air battery of FIG. 7.

FIG. 8 shows charge-discharge characteristics with respect to amounts of 1 g, 2 g, and 3 g of zinc oxide to be introduced into the metal-air battery of FIG. 7. When the amount of zinc oxide was 1 g, the deposition thickness of zinc oxide was 2 mm, and the discharge capacity was 685 mAh at 6.5 hours. When the amount of zinc oxide was 2 g, the deposition thickness of zinc oxide was 4 mm, and the discharge capacity was 1316 mAh at 13 hours. When the amount of zinc oxide was 3 g, the deposition thickness of zinc oxide was 6 mm, and the discharge capacity was 1974 mAh at 26.5 hours. Thus, since the discharge capacity increased substantially in proportion to the amount of zinc oxide, it can be seen that any amount of zinc oxide was sufficiently regenerated and exhibited good charge and discharge characteristics as an air battery. However, as shown in FIG. 2, when the amount of zinc oxide was 3 g (the deposition thickness was 6 mm), the thickness of zinc after charging was 20 mm.

(Example 1) Metal-air battery using regenerated fuel subjected to reduction treatment and crushing treatment

A fuel cell 400, which is a four-electrode metal-air battery schematically shown in FIG. 9, was fabricated. The fabricated fuel cell 400 had a cylindrical container 10 made of acrylic, with an inner diameter of 25 mm and a height of 50 mm. Inside the container 10, a positive electrode for charging 21 and a negative electrode for charging 22 were provided in the upper part, and a positive electrode for discharging 51 and a negative electrode for discharging 52 were provided in the lower part. The fuel cell 400 was configured such that oxygen could be taken in from the side of the positive electrode for discharging 51. As the crushing unit 30, a stirring blade (1-7124-02 Three-One Motor BL600 (AXEL) AS ONE) was arranged between the positive electrode for charging 21 and the negative electrode for charging 22 in the upper part. The fuel cell 400 was composed of the container 10, the regeneration apparatus 100 including the positive electrode for charging 21, the negative electrode for charging 22, and the crushing unit 30, and the discharge section 200 including the positive electrode for discharging 51 and the negative electrode 52 for discharging.

A metal mesh made of nickel was used as the positive electrode for charging 21 in the upper part. Metal meshes made of copper were used as the negative electrode for charging 22 and the negative electrode for discharging 52. A Ni-plated SUS mesh was used as the lower positive electrode for discharging 51, and an air electrode layer (oxygen reduction electrode) of the positive electrode for discharging 51 (positive electrode current collector)/catalyst layer/PTFE water-repellent film was prepared in the same manner as in Reference Example 1. As shown in FIG. 9, the negative electrode for discharging 52 had a U-shaped cross section and an open top surface.

50 g of a 3M aqueous solution of potassium hydroxide containing 2 g of zinc oxide after discharge (particle diameter: 0.3 $\mu$m) as an electrolytic solution was introduced into the fuel cell 400 from the upper part, and passed through the negative electrode for discharging 52, filling the space from the positive electrode for charging 21 and the negative electrode for charging 22 to the positive electrode for discharging 51 in the lower part.

While rotating the stirring blade of the crushing unit 30 at a rotational speed of 10 rpm, a current of 100 mA was applied between the positive electrode for charging 21 and the negative electrode for charging 22 in the upper part to perform a reduction treatment of zinc oxide, thereby depositing zinc equivalent to 1 g (corresponding to 820 mAh), and the deposited zinc was crushed using the stirring blade. The crushed zinc was deposited inside the lower U-shaped negative electrode for discharging 52.

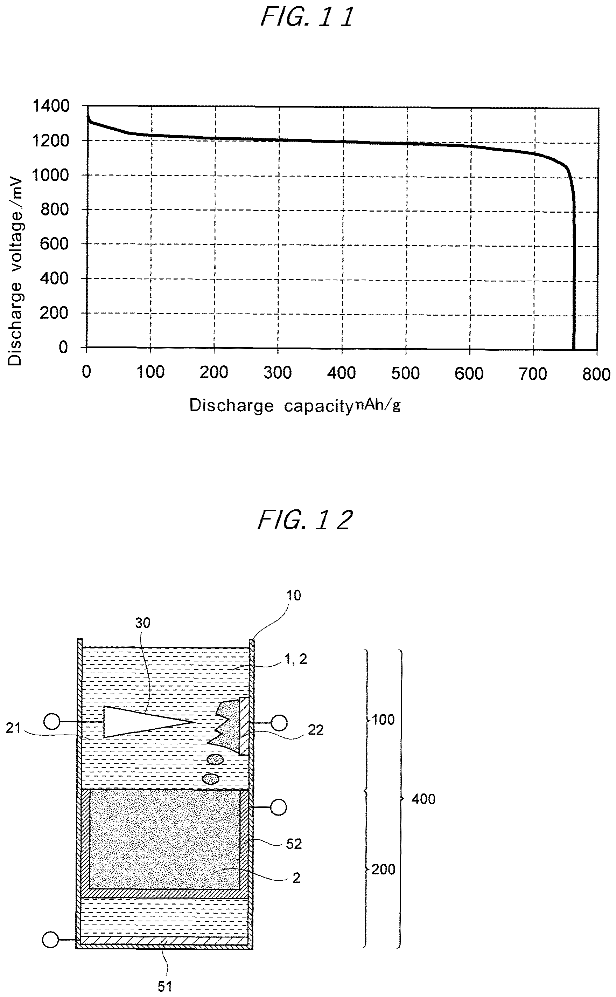

Discharging was performed by applying a current of 20 mA between the positive electrode for discharging 51 and the negative electrode for discharging 52 using the crushed zinc deposited on the negative electrode for discharging 52 as the regenerated fuel, whereby the discharge voltage shown in FIG. 11 was obtained, and a capacity of about 760 mAh was obtained.

(Example 2)

A fuel cell 400, which is a four-electrode metal-air battery schematically shown in FIG. 12, was fabricated in the same manner as in Example 1 except that an ultrasonic homogenizer (Yamato Scientific Ultrasonic Homogenizer, LUH150) was used instead of the stirring blade as the crushing unit 30. The tip portion of the ultrasonic homogenizer facing the charging negative electrode 22 was arranged at a distance of about 2 mm from the negative electrode for charging 22.

50 g of a 3M aqueous potassium hydroxide solution containing 2 g of zinc oxide after discharge (particle diameter: 0.3 $\mu$m) as an electrolytic solution was introduced into the fuel cell 400 from the upper part, and passed through the negative electrode for discharging 52, filling the space from the positive electrode for charging 21 and the negative electrode for charging 22 in the upper part to the lower positive electrode for discharging 51.

The ultrasonic homogenizer was vibrated at 20 kHz with an output of 50 W to generate ultrasonic waves, while a current of 100 mA was applied between the upper positive electrode for charging 21 and the negative electrode for charging 22 to perform the reduction treatment of zinc oxide, thereby depositing zinc equivalent to 1 g (corresponding to 820 mAh), and the deposited zinc was crushed by the ultrasonic waves emitted from the ultrasonic homogenizer. The crushed zinc was deposited inside the lower U-shaped negative electrode for discharging 52.

Discharging was performed by applying a current of 20 mA between the positive electrode for discharging 51 and the negative electrode for discharging 52 using the zinc deposited on the negative electrode for discharging 52 as regenerated fuel, whereby the same discharge voltage and capacity as in Example 1 were obtained.

(Example 3)

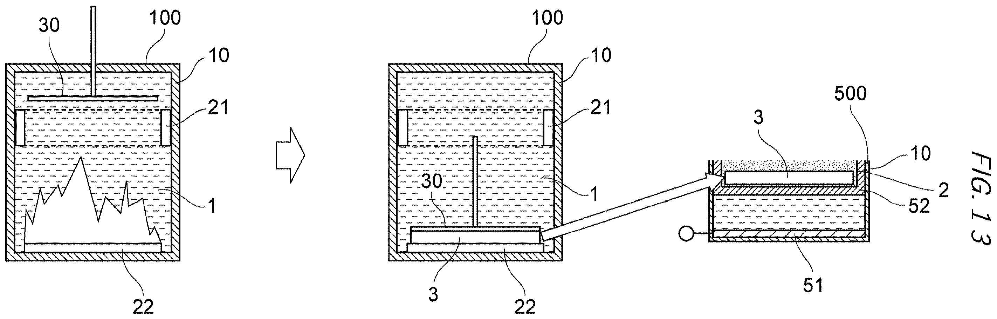

As schematically illustrated in FIG. 13, a regeneration apparatus 100 and a fuel cell (discharging cell) 500 were separately prepared. The regeneration apparatus 100 was provided with a negative electrode for charging 22 at the lower part of a cylindrical container 10 made of acrylic resin, having an inner diameter of 25 mm and a height of 25 mm, and a cylindrical positive electrode for charging 21 at the upper part thereof. As the crushing unit 30, a press mechanism was provided, which includes a cylindrical press portion made of polytetrafluoroethylene (PTFE) having a diameter of 23 mm, for crushing zinc dendrites deposited from the surface of the negative electrode for charging 22 toward the positive electrode for charging 21 by pressing from above.

As the upper positive electrode for charging 21, a metal mesh made of nickel having an opening portion in the central part for passing a shaft supporting the press portion of the press mechanism was used. As the negative electrode for charging 22, a metal mesh made of copper was used.

The fuel cell 500 was provided with a positive electrode for discharging 51 at the lower part and a negative electrode for discharging 52 at the upper part of a cylindrical container 10 made of acrylic resin, having an inner diameter of 25 mm and a height of 25 mm, and had a configuration capable of taking in oxygen from the side of the positive electrode for discharging 51. As the positive electrode for discharging 51, a Ni-plated SUS mesh was used, and an air electrode layer (oxygen reduction electrode) composed of the positive electrode for discharging 51 (positive electrode current collector)/catalyst layer/PTFE water-repellent film was prepared in the same manner as in Reference Example 1. As shown in FIG. 13, the negative electrode for discharging 52 had a U-shaped cross section with an open upper surface.

25 g of a 3M aqueous potassium hydroxide solution containing 1 g of zinc oxide after discharge (particle size 0.3 $\mu$m) as an electrolytic solution was introduced from the upper part of the regeneration apparatus 100, filling the space from the positive electrode for charging 21 to the negative electrode for charging 22.

A current of 100 mA was applied between the positive electrode for charging 21 and the negative electrode for charging 22 to perform a reduction treatment of zinc oxide, thereby depositing zinc equivalent to 1 g (corresponding to 820 mAh) on the negative electrode for charging 22. The press portion was pressed down to crush and densify the zinc deposited on the negative electrode for charging 22 by pressing, thereby obtaining a 1 mm thick plate-shaped regenerated fuel 3 composed of zinc on the negative electrode for charging 22.

The obtained plate-shaped zinc was taken out from the regeneration apparatus 100 and placed onto the negative electrode for discharging 52 of the fuel cell 500. 25 g of a 3M aqueous potassium hydroxide solution was introduced, filling the space from the positive electrode for discharging 51 to the negative electrode for discharging 52, and discharging was performed by applying a current of 20 mA between the positive electrode for discharging 51 and the negative electrode for discharging 52, whereby the same discharge voltage and capacity as in Example 1 were obtained.

(Example 4)

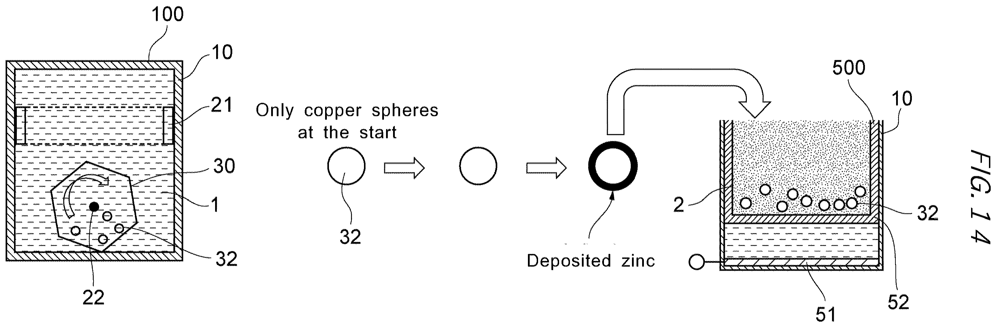

As schematically illustrated in FIG. 14, a regeneration apparatus 100 and a fuel cell (discharging cell) 500 were separately prepared. The regeneration apparatus 100 was provided with a rotating barrel as the crushing unit 30 at the lower part of a cylindrical container 10 made of acrylic resin, having an inner diameter of 25 mm and a height of 25 mm, and a cylindrical positive electrode for charging 21 at the upper part thereof. The rotating barrel had an inner diameter of 25 mm and was composed of a mesh of polypropylene resin. 25 g of copper spheres with a diameter of 2 mm were placed in the rotating barrel as the media 32.

The regeneration apparatus 100 was also provided with a copper wire having a diameter of 3 mm as the negative electrode for charging 22, which was passed through the inside from the rotation axis of the rotating barrel so as not to rotate together with the rotating barrel. A motor was arranged at the upper part of the container 10, and an annular belt was placed over the motor and the rotating axis of the rotating barrel to rotate the rotating barrel by rotation of the motor.

As the upper positive electrode for charging 21, a metal mesh made of nickel having an opening for passing a belt in a central part thereof was used. The fuel cell 500 had the same configuration as that of Example 3.

25 g of a 3M aqueous potassium hydroxide solution containing 1 g of zinc oxide after discharge (particle size 0.3 $\mu$m) was introduced from the upper part of the regeneration apparatus 100 as an electrolytic solution, filling the space from the positive electrode for charging 21 to the negative electrode for charging 22.

A current of 100 mA was applied between the positive electrode for charging 21 and the negative electrode for charging 22 while rotating the rotating barrel at 10 rpm to perform a reduction treatment of zinc oxide, thereby depositing zinc equivalent to 1 g (corresponding to 820 mAh). The zinc deposited on the surface of the negative electrode for charging 22 and the surface of the copper spheres was crushed and deposited at the lower part of the rotating barrel. As schematically shown in FIG. 14, the deposited zinc was compressed and remained in a film shape on the surface of the copper spheres, which are the media 32.

The crushed zinc deposited at the lower part of the rotating barrel and the media 32 of the copper spheres having zinc remaining as a film on the surface were taken out from the regeneration apparatus 100 and placed on the negative electrode for discharging 52 of the fuel cell 500. 25 g of a 3M aqueous potassium hydroxide solution was introduced, filling the space from the positive electrode for discharging 51 to the negative electrode for discharging 52, and discharging was performed by applying a current of 20 mA between the positive electrode for discharging 51 and the negative electrode for discharging 52, whereby the same discharge voltage and capacity as in Example 1 were obtained.

(Comparative Example 1)

As a Comparative Example, a fuel cell 410, which is a four-electrode metal-air battery shown in FIG. 10, was fabricated. The fuel cell 410 had the same configuration as the fuel cell 400 evaluated in Example 1 except that it did not have the crushing unit 30.

50 g of a 3M aqueous solution of potassium hydroxide containing 2 g of zinc oxide after discharge (particle diameter: 0.3 $\mu$m) as an electrolytic solution was introduced into the fuel cell 410 from the upper part, passed through the negative electrode for discharging 52, and filled the space from the upper positive electrode for charging 21 and the negative electrode for charging 22 to the lower positive electrode for discharging 51.

A current of 100 mA was applied between the positive electrode for charging 21 and the negative electrode for charging 22 in the upper part to perform a reduction treatment of zinc oxide to deposit zinc equivalent to 1 g (corresponding to 820 mAh).

The deposited zinc remained attached to the negative electrode for charging 22 and grew toward the positive electrode for charging 21, without slipping off, so that no battery output could be obtained between the negative electrode for discharging 52 and the positive electrode for discharging 51.

Table 1 shows the charge capacity and discharge capacity obtained in Examples 1 to 4 and Comparative Example 1.

[Table 1]

|  | Charge capacity (mAh) | Discharge capacity (mAh) |
|---|---|---|
| Example 1 | 820 | 761 |
| Example 2 | 820 | 750 |
| Example 3 | 820 | 781 |
| Example 4 | 820 | 791 |
| Comparative Example 1 | 820 | 0 |

REFERENCE SIGNS LIST

100 Regeneration apparatus
200 Discharge section
300 Fuel cell (three-electrode metal-air battery)
400 Fuel cell (four-electrode metal-air battery)
410 Fuel cell (four-electrode metal-air battery)
500 Fuel cell
1 Spent fuel
2 Regenerated fuel
3 Plate-shaped regenerated fuel
10 Container
101 First accommodation section
102 Second accommodation section
11 First container
12 Second container
13 Third container
14 Connection section
15 Partition plate
16 Introduction section
20 Electrode
21 Positive electrode for charging
22 Negative electrode for charging
30 Crushing unit
32 Media
40 Recovery container
51 Positive electrode for discharging
52 Negative electrode for discharging

**Claims**

1. A regeneration apparatus for regenerating spent fuel of a fuel cell using a metal as fuel, the apparatus comprising a container configured to be capable of accommodating the spent fuel, wherein

   the spent fuel contains a metal compound of a metal oxide, a metal hydroxide, or a combination thereof, and the container comprises:

   a pair of electrodes configured to be capable of performing a reduction treatment to reduce the metal compound to a metal by applying a current to the spent fuel, and
   a crushing unit configured to be capable of performing a crushing treatment to mechanically crush at least a part of the reduced metal formed on a surface of a negative electrode of the pair of electrodes.

2. The regeneration apparatus according to claim 1, wherein the container comprises a first container and a second container connected to the first container, and the second container comprises the electrode and the crushing unit.

3. The regeneration apparatus according to claim 2, wherein the second container is located below the first container.

4. The regeneration apparatus according to claim 1, further comprising a third container configured to be capable of accommodating fuel regenerated by the reduction treatment and the crushing treatment.

5. The regeneration apparatus according to claim 4, wherein the third container is located below the container.

6. A fuel cell comprising the regeneration apparatus according to claim 1 and a discharge section.

7. The fuel cell according to claim 6, further comprising a positive electrode for charging, a negative electrode for both charging and discharging, and a positive electrode for discharging, wherein the positive electrode for charging and the negative electrode for both charging and discharging constitute the electrode, and the positive electrode for discharging and the negative electrode for both charging and discharging constitute the discharge section.

8. The fuel cell according to claim 6, further comprising a positive electrode for charging, a negative electrode for charging, a positive electrode for discharging, and a negative electrode for discharging, wherein the positive electrode for charging and the negative electrode for charging constitute the electrode, and the positive electrode for discharging and the negative electrode for discharging constitute the discharge section.

9. The regeneration apparatus according to any one of claims 1 - 5, wherein the fuel cell is a metal-air battery, a metal flow battery, or a metal slurry fuel cell.

10. The fuel cell according to any one of claims 6 to 8, wherein the fuel cell is a metal-air battery, a metal flow battery, or a metal slurry fuel cell.

11. A regeneration method for regenerating spent fuel of a fuel cell using a metal as fuel, wherein the spent fuel contains a metal compound of a metal oxide, a metal hydroxide, or a combination thereof,
the regeneration method comprising:

      accommodating the spent fuel in a container;
      applying a current to the spent fuel using electrodes to perform a reduction treatment to reduce the metal compound into a metal; and
      performing a mechanical crushing treatment on at least a part of the reduced metal formed on a surface of a negative electrode of the electrodes to regenerate the spent fuel.

12. The regeneration method according to claim 11, wherein the fuel cell using a metal as fuel comprises a cartridge-type anode unit, and wherein the accommodating the spent fuel in the container comprises retrieving the spent fuel from the cartridge-type anode unit and placing the spent fuel into the container.

13. The regeneration method according to claim 11 or 12, comprising retrieving the regenerated fuel from the container and using the retrieved regenerated fuel as fuel for a fuel cell.

## FIG. 1

## FIG.2

## FIG.3

## FIG.4

*FIG.5*

## FIG.6

## FIG.7

## FIG.8

*FIG.9*

*FIG. 1 0*

## FIG. 11

## FIG. 12

FIG. 13

## FIG. 14

*FIG. 1 5*

## INTERNATIONAL SEARCH REPORT

| International application No. |
|---|
| **PCT/JP2024/008335** |

**A. CLASSIFICATION OF SUBJECT MATTER**

*H01M 12/08*(2006.01)i; *B09B 3/35*(2022.01)i; *C22B 7/00*(2006.01)i; *H01M 4/90*(2006.01)i
FI: H01M12/08 K; B09B3/35; C22B7/00 C; H01M4/90 M

According to International Patent Classification (IPC) or to both national classification and IPC

**B. FIELDS SEARCHED**

Minimum documentation searched (classification system followed by classification symbols)

H01M12/08; B09B3/35; C22B7/00; H01M4/90

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-532270 A (E-ZN INC.) 13 October 2016 (2016-10-13) | 1-13 |
| A | JP 2016-76391 A (SHARP KABUSHIKI KAISHA) 12 May 2016 (2016-05-12) | 1-13 |
| A | US 2022/0352527 A1 (FORM ENERGY, INC.) 03 November 2022 (2022-11-03) | 1-13 |
| A | JP 2017-147068 A (SHARP KABUSHIKI KAISHA) 24 August 2017 (2017-08-24) | 1-13 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/008335**

| Patent document cited in search report | | | Publication date (day/month/year) | Patent family member(s) | | | Publication date (day/month/year) |
|---|---|---|---|---|---|---|---|
| JP | 2016-532270 | A | 13 October 2016 | US | 2015/0056524 | A1 | |
| | | | | US | 2017/0117568 | A1 | |
| | | | | WO | 2015/028887 | A1 | |
| | | | | EP | 3039744 | A1 | |
| | | | | CN | 104781981 | A | |
| | | | | CA | 2922345 | A1 | |
| JP | 2016-76391 | A | 12 May 2016 | (Family: none) | | | |
| US | 2022/0352527 | A1 | 03 November 2022 | US | 2022/0352528 | A1 | |
| JP | 2017-147068 | A | 24 August 2017 | (Family: none) | | | |

Form PCT/ISA/210 (patent family annex) (July 2022)

26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6694955 B

- JP 2013225410 A